# EUROPÄISCHE PATENTSCHRIFT

(11) **EP 4 735 555 B1**
(45) Veröffentlichungstag und Bekanntmachung des Hinweises auf die Patenterteilung: **04.11.2026**
(21) Anmeldenummer: 24735947.4
(22) Anmeldetag: 20.06.2024
(51) Int. Cl.: C09K 5/10, C23F 11/08, C23F 11/12, C23F 11/14, C23F 11/18, F03D 80/60

(54) **NEUE ANWENDUNGEN FÜR KÜHLMITTEL**
NEW APPLICATIONS FOR COOLANTS
NOUVELLES APPLICATIONS POUR RÉFRIGÉRANT

(30) Priorität: 28.06.2023 EP 23181958
(43) Veröffentlichungstag der Anmeldung: 06.05.2026
(73) Patentinhaber: BASF SE, 67056 Ludwigshafen am Rhein (DE)
(72) Erfinder: FOERSTER, Uwe, 67056 Ludwigshafen am Rhein (DE); KRKLJUS, Ivana, 67056 Ludwigshafen am Rhein (DE); WENDLING, Timo, 67056 Ludwigshafen am Rhein (DE); MAYER, Guido, 67056 Ludwigshafen am Rhein (DE)
(74) Vertreter: BASF IP Association
(86) Internationale Anmeldenummer: PCT/EP2024/067257
(87) Internationale Veröffentlichungsnummer: WO 2025/002978

(56) Entgegenhaltungen:
- EP-A1- 3 828 411
- WO-A1-02/090462
- CN-A- 107 090 276
- CN-A- 109 837 071
- CN-A- 110 699 048
- CN-A- 113 969 143
- CN-A- 114 907 821

## Beschreibung

Die vorliegende Erfindung betrifft bevorzugte Kühlmittel in Kühlsystemen von Windkraftanlagen.

Kühlmittel für Kraftfahrzeuge sind bereits seit langem bekannt und werden dort zur Abfuhr von Wärme besonders von Verbrennungsmotoren eingesetzt. In Windkraftanlagen wird im Betrieb ebenfalls Wärme freigesetzt und muss abgeführt werden, um dort mechanische oder elektrische Systeme, wie z.B. Generator, Getriebe, Lager, Umrichter und Stellsystem vor Überhitzung zu schützen. Gegenüber Kraftfahrzeugen sind Service- und Wartungsarbeiten bei Windkraftanlagen wesentlich komplizierter und aufwendiger, insbesondere bei offshore Windkraftanlagen, so dass besonders eine Verlängerung der Serviceintervalle anzustreben ist. Außerdem werden andere Anforderungen an Kühlmittel bei Windkraftanlagen gestellt als bei Kraftfahrzeugen, da andere Materialien in deren Kühlsystemen eingesetzt werden und die Betriebsbedingungen sich von denen eines Kraftfahrzeugs unterscheiden. So sind Kühlmittel in Verbrennungsmotoren eines Kraftfahrzeugs höheren Wandtemperaturen und somit höherer thermischer Belastung ausgesetzt, wohingegen in Windkraftanlagen eine hohe Korrosionsinhibierung der eingesetzten Werkstoffe und Wartungsintervalle von mindestens 5 Jahren gefordert werden. Eine einfache Übertragung eines Kühlmittels für Kraftfahrzeuge auf die Anforderungen einer Windkraftanlage ist also nicht möglich.

EP 3828411 A1 beschreibt eine Windturbine und ein Verfahren zu deren Betrieb. Erwähnt wird auch ein Kühlmittel, bei dem es sich um Wasser, Glycol oder ein Gemisch daraus handeln solle.

Diese Art von Kühlmittel erfüllen jedoch nicht die oben gestellten Anforderungen an ein Kühlmittel für Windkraftanlagen. EP 3828411 A1 enthält keinerlei Aussagen z.B. zu Korrosionsbeständigkeit, Viskosität, Stabilität, Temperaturbeständigkeit oder elektrischer Leitfähigkeit des Kühlmittels.

CN 109837071 B beschreibt gemäß der verfügbaren Maschinenübersetzung Kühlmittel für Windkraftgeneratoren aus Ethylenglykol, aliphatischer Monocarbonsäure, Azolkomponente, Entschäumer und Wasser sowie einer Korrosionsinhibitormischung aus alkoxyliertem acetylenischen Alkohol und Imidazolinen als Korrosionsinhibitor. Die so beschriebenen Kühlmittel weisen eine elektrische Leitfähigkeit unter 200 µS/cm auf.

Nachteilig an diesen Kühlmitteln ist, dass zur Erreichung der geforderten niedrigen elektrischen Leitfähigkeit die beschriebene Korrosionsinhibitormischung eingesetzt werden muss, die nicht kommerziell verfügbar ist und demzufolge die Kosten für diese Kühlmittel erhöht. Ferner werden als weitere Korrosionsinhibitoren ausschließlich aliphatische Monocarbonsäuren beschrieben.

Aufgabe der vorliegenden Erfindung war es also, Kühlmittel zur Verfügung zu stellen, die das besondere Anforderungsprofil von Windkraftanlagen und die Besonderheiten in deren Betrieb erfüllen.

Die Aufgabe wurde gelöst durch die Verwendung eines Kühlmittels, enthaltend
- mindestens ein Alkylenglykol, Alkylenglykolmonoalkylether oder Glycerin, bevorzugt Monoethylenglykol,
- optional mindestens eine organische Mono- oder Dicarbonsäure, bevorzugt aliphatische Mono- oder Dicarbonsäure,
- optional mindestens ein anorganisches Salz ausgewählt aus der Gruppe bestehend aus Molybdaten, Boraten, Phosphaten, Silikaten, Nitriten und Nitraten,
- mindestens eine Azolverbindung,
- Wasser,
- optional mindestens einen Kieselsäureester,
- optional mindestens ein Silikophosphonat, sofern Silikate anwesend sind, und
- optional weitere Inhibitoren und kühlmitteltypische Bestandteile,
   mit der Maßgabe, dass mindestens eine Mono- oder Dicarbonsäure und/oder mindestens ein anorganisches Salz in dem Kühlmittel anwesend sind,
   in einem Kühlsystem von Windkraftanlagen, bevorzugt in einem Kühlsystem zum Wärmemanagement mindestens eines Bestandteils einer Windkraftanlage ausgewählt aus der Gruppe bestehend aus
- Generator,
- Getriebe,
- Lager,
- Umrichter und
- Stellsystem.

Diese Kühlmittel und besonders die weiter unten aufgeführten Ausführungsformen erfüllen die Anforderungen und weisen eine ausreichend korrosionsinhibierende Wirkung für die eingesetzten Kühlsysteme als auch eine ausreichende Stabilität der enthaltenen Komponenten des Kühlmittels auf, so dass die Haltbarkeit des Kühlmittels erhöht und somit die Wartungsintervalle verlängert sind. Es wurde gefunden, dass die gemäß der CN 109837071 B aufgestellte Obergrenze der elektrischen Leitfähigkeit von 200 µS/cm für das Kühlmittel nicht zwingend erforderlich ist, sondern zugunsten eines höheren Gehaltes an Korrosionsinhibitoren aufgegeben werden kann, der eine korrosionsinhibierende Wirkung über die geforderte lange Laufzeit in Windkraftanlagen sicherstellt.

Insbesondere wird erfindungsgemäß auf die Korrosionsinhibitorzusammensetzung der CN 109837071 B aus alkoxyliertem acetylenischen Alkohol und Imidazolin-Korrosionsinhibitor verzichtet, besonders auf Propinolalkoxylat, Butindiolalkoxylat und Octinolalkoxylat als alkoxylierte acetylenische Alkohole und Carboxyethylimidazolin, Heptadecenylamin ethylimidazolin und Heptadecenylamin ethylimidazoline quaternären Ammoniumsalzen. Die Anwesenheit einer Kombination aus alkoxyliertem acetylenischen Alkohol und Korrosionsinhibitoren mit Imidazolinstruktur in den erfindungsgemäßen Kühlmittel ist gemäß der vorliegenden Erfindung ausgeschlossen.

Besonders wird eine hohe Inhibierung der Korrosion von Aluminium gefordert, da Aluminium ein vielfach verbauter Werkstoff in den Kühlsystemen von Windkraftanlagen ist.

Die Komponenten des Kühlmittels seien im folgenden beschrieben:

### Gefrierpunktserniedrigende Komponente

Diese Komponente bewirkt in den Kühlmitteln die hauptsächliche Gefrierpunktserniedrigung. Dabei handelt es sich um monomere bis tetramere 1,2-Ethylenglykole, 1,2-Propylenglykole oder seltener um 1,3-Propylenglykole, bevorzugt um monomere bis trimere 1,2-Ethylenglykole oder 1,2-Propylenglykole, besonders bevorzugt um monomere oder dimere 1,2-Ethylenglykole, ganz besonders bevorzugt um monomeres 1,2-Ethylenglykol (Monoethylenglykol), sowie jeweils die Gemische davon.

Bei den Alkylenglykolmonoalkylethern handelt es sich um die Mono-C₁-C₄-alkylether der oben genannten Alkylenglykole, bevorzugt die Mono Methyl-, Ethyl- oder n-Butyl ether, besonders bevorzugt die Mono Methyl- oder n-Butyl ether und ganz besonders bevorzugt die Mono Methylether.

Ferner sind Glycerin oder Glycerinoligomere mögliche gefrierpunktserniedrigende Komponenten.

Bevorzugte Alkylenglykol-Komponenten bzw. Derivate sind insbesondere Monoethylenglykol, Diethylenglykol, Triethylenglykol, Tetraethylenglykol und deren Gemische, daneben aber auch Monopropylenglykol, Dipropylenglykol und deren Gemische, Polyglykole, Glykolether, beispielsweise Monoethylenglykol monomethylether, Diethylenglykol monomethylether, Triethylenglykol monomethylether, Tetraethylenglykol monomethylether, Monoethylenglykol monoethylether, Diethylenglykol monoethylether, Triethylenglykol monoethylether, Tetraethylenglykol monoethylether, Monoethylenglykol mono-n-butylether, Diethylenglykol mono-n-butylether, Triethylenglykol mono-n-butylether und Tetraethylenglykol mono-n-butylether, oder Glycerin jeweils allein oder als Mischungen hieraus verwendet werden.

Besonders bevorzugt werden Monoethylenglykol allein oder Mischungen von Monoethylenglykol als Hauptkomponente verwendet, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

In einer besonders bevorzugten Ausführungsform besteht die gefrierpunktserniedrigende Komponente aus Monoethylenglykol, wobei das Monoethylenglykol herstellungsbedingt bis zu 5 Gew% andere der oben genannten Alkylenglykolkomponenten enthalten kann, bevorzugt bis zu 3 und besonders bevorzugt bis zu 2 Gew%. Monoethylenglykol enthält herstellungsbedingt untergeordnete Mengen der höheren Homologen, besonders Diethylenglykol, Triethylenglykol und Tetraethylenglykol. In der Regel beträgt deren Gehalt in Summe bis zu 10 Gew%, bevorzugt bis zu 7,5 Gew% und ganz besonders bevorzugt bis zu 5 Gew%. Dabei nimmt der Anteil mit zunehmendem Molgewicht der Homologen in der Regel ab.

In einer bevorzugten erfindungsgemäßen Ausführungsform wird Monoethylenglykol in die Kühlmittel eingesetzt, das zumindest teilweise, bevorzugt vollständig aus der Aufarbeitung gebrauchter wässriger Kühlmittel stammt.

Dazu werden zunächst gebrauchte wässrige Kühlmittel, bevorzugt aus Kraftfahrzeugen und/oder ortsfesten Motoren oder Generatoren, dezentral gesammelt, bevorzugt von Werkstätten und/oder Wartungsfirmen,
- die so gesammelten gebrauchten wässrigen Kühlmittel werden gesammelt, vereinigt und zu einem zentralen Ort transportiert und dort werden diese gebrauchten, wäßrigen glykolhaltigen Kühlmittel einem Reinigungsverfahren unterworfen, bevorzugt mindestens einer Destillation.

Bevorzugt wendet man das in der unveröffentlichten Europäischen Patentanmeldung mit dem Aktenzeichen 23214551.6 und dem Anmeldetag 6. Dezember 2023 beschriebene Reinigungsverfahren an, in dem man die gebrauchten, wäßrigen glykolhaltigen Kühlmittel einem Reinigungsverfahren unterzieht, umfassend mindestens die Schritte
(a) destillative Abtrennung von leichter als Glykol siedenden Inhaltsstoffen,
(b) Destillation von Glykol,
   sowie darüberhinaus noch mindestens einen der Schritte
(c) Strippen eines glykolhaltigen Gemischs mit einem Gas, bevorzugt einem Inertgas,
(d) Behandlung eines glykolhaltigen Gemischs mit einem sauren oder basischen, bevorzugt basischen Feststoff,
(e) Behandlung eines glykolhaltigen Gemischs mit Aktivkohle, und/oder
(f) Membranfiltration eines glykolhaltigen Gemischs.

Die einzelnen Verfahrensschritte sind in der Europäischen Patentanmeldung mit dem Aktenzeichen 23214551.6 näher ausgeführt.

Das aufgearbeitete Monoethylenglykol wird im Rahmen dieser Schrift als recycliertes Monoethylenglykol bezeichnet.

In einer bevorzugten Ausführungsform enthält das Monoethylenglykol, das in das Kühlmittel für die erfindungsgemäße Verwendung eingesetzt wird, mindestens 33 Gew% recycliertes Monoethylenglykol, besonders bevorzugt mindestens 50, ganz besonders bevorzugt mindestens 66, insbesondere mindestens 75 und speziell mindestens 90 Gew%. In einer besonderen Ausführungsform handelt es sich bei dem eingesetzten Monoethylenglykol vollständig um recycliertes Monoethylenglykol.

In einer weiteren bevorzugten erfindungsgemäßen Ausführungsform wird Monoethylenglykol in die Kühlmittel eingesetzt, das zumindest teilweise, bevorzugt vollständig aus nachwachsenden Rohstoffen stammt.

Das aus nachwachsenden Rohstoffen erhaltene Monoethylenglykol kann dadurch charakterisiert werden, dass das ¹⁴C/¹²C-Isotopenverhältnis bestimmt wird, bevorzugt gemäß der ASTM D 6866 ("Determining the Biobased Content of Natural Range Materials Using Radiocarbon and Isotope Ratio Mass Spectrometry Analysis").

Gemäß dieser Testmethode wird das ¹⁴C/¹²C-Isotopenverhältnis einer Probe gemessen und verglichen mit dem ¹⁴C/¹²C-Isotopenverhältnis in einem standardisierten 100% biobasierten Material. Als Ergebnis wird der Gehalt an biobasiertem Anteil in dem Muster erhalten.

Die Anwendung von ASTM-D6866 zur Ableitung des "biobasierten Gehalts" basiert auf den gleichen Konzepten wie eine Radiokohlenstoffdatierung, aber ohne Verwendung der Altersgleichungen. Die Analyse wird durchgeführt, indem ein Verhältnis der Menge an Radiokohlenstoff (¹⁴C) in einer unbekannten Probe bestimmt wird im Vergleich zu der eines modernen Referenzstandards. Diese Kennzahl wird in Prozent angegeben mit der Einheit "pMC" (percent modern carbon, Prozent moderner Kohlenstoff). Wenn es sich bei dem zu analysierenden Material um ein Gemisch aus heutigem Radiokohlenstoff handelt und fossilem Kohlenstoff (mit sehr geringem Radiokohlenstoffgehalt), so korreliert der erhaltene pMC-Wert direkt mit der Menge des in der Probe vorhandenen Biomassematerials.

Das erfindungsgemäß in den Kühlmitteln eingesetzte Monoethylenglykol weist bevorzugt einen biobasierten Anteil, gemessen als ¹⁴C:¹²C-Verhältnis ASTM-D6866 von mehr als 0%, bevorzugt mindestens 1%, besonders bevorzugt mindestens 5%, ganz besonders bevorzugt mindestens 10%, insbesondere mindestens 20% und speziell mindestens 25% auf.

Mit Vorteil kann dieser biobasierte Anteil mindestens 30%, bevorzugt mindestens 40, besonders bevorzugt mindestens 50, ganz besonders bevorzugt mindestens 66, insbesondere mindestens 75 und speziell mindestens 85% betragen.

Bei einem Anteil von mindestens 90%, bevorzugt mindestens 95%, besonders bevorzugt mindestens 98% und sogar 100% kann dies als deutlich überwiegend oder vollständig biobasiertes Monoethylenglykol bezeichnet werden.

Beispielsweise kann dieses biobasierte bzw. aus nachwachsenden Rohstoffen erhaltene Monoethylenglykol nach einem Verfahren gewonnen werden wie beschrieben in der unveröffentlichten Europäischen Patentanmeldung mit dem Aktenzeichen 23185804.4 und dem Anmeldetag 17. Juli 2023. In dieser Anmeldung sind Verfahren beschrieben, nach denen biobasiertes Monoethylenglykol aus unterschiedlichen Quellen gewonnen werden kann.

Durch den zumindest teilweisen Einsatz von biobasiertem Monoethylenglykol können die Emissionen bei dem Einsatz von alkylenglykolhaltigen Kühlmitteln, beispielsweise Stickoxid- und Schwefeloxid-Emissionen und insbesondere der Kohlenstoffdioxid-Emissionen, bevorzugt bestimmt als Carbon-Footprint, Ökobilanz oder gemäß DIN EN ISO 14021, DIN EN ISO 14067, hier besonders die Ausgabe 2019-02, DIN EN ISO 14044, hier besonders die Ausgabe 2006 + A1:2018 und/oder DIN EN ISO 14040, hier besonders die Ausgabe 2009-11 verringert werden.

### Organische Mono- oder Dicarbonsäure

Die organischen Carbonsäuren werden häufig als Korrosionsinhibitoren gegen die Korrosion von Eisenwerkstoffen eingesetzt. Eisenwerkstoffe sind beispielsweise Stahl, Schmiede- oder Gusseisen.

Bei den organischen Mono- und Dicarbonsäuren kann es sich um aromatische oder aliphatische Carbonsäuren handeln, bevorzugt sind aromatische Monocarbonsäuren und aliphatische Mono- und Dicarbonsäuren; besonders bevorzugt aliphatische Mono- und Dicarbonsäuren.

Als aromatische Monocarbonsäuren ist Benzoesäure bevorzugt, die als freie Säure oder besonders bevorzugt in Form ihres Alkalimetallsalzes eingesetzt werden kann, ganz besonders bevorzugt als Natriumbenzoat.

Bevorzugte Monocarbonsäuren sind organische aliphatische Alkan- oder Alkencarbonsäuren. Diese werden, ausreichende Wasserlöslichkeit vorausgesetzt, in Kühlmitteln häufig als Korrosionsinhibitoren gegen die Korrosion von Eisenwerkstoffen eingesetzt.

Typische derartige Monocarbonsäuren sind Pentansäure, 2,2-Dimethylpropansäure, Hexansäure, 2,2-Dimethylbutansäure, Octansäure, 2-Ethylhexansäure, Nonansäure, Isononansäure, Decansäure, Undecansäure und Dodecansäure, sowie deren Isomerengemische, insbesondere 2-Ethylhexansäure und Isononansäure-Isomerengemische.

Beispiele für verzweigte aliphatische Monocarbonsäuren sind 2-Ethylhexansäure, 2,2-Dimethylhexansäure (Neooctansäure, Versatic Acid 8), 2,2-Dimethylheptansäure (Neononansäure, Versatic Acid 9), Isononansäure, 2-Propyl heptansäure, 2,2-Dimethyloctansäure (Neodecansäure, Versatic Acid 10), Neoundecansäure (Versatic Acid 11), Neododecansäure, und Neotridecansäure (Versatic Acid 13).

Der Einsatz von 2-Ethylhexansäure kann aus gesundheitlichen Gründen weniger bevorzugt sein. Bevorzugt beträgt der Gehalt an 2-Ethylhexansäure im Kühlmittel weniger als 3 %, besonders bevorzugt weniger als 0,3 %, ganz besonders bevorzugt enthalten die Kühlmittel keine 2-Ethylhexansäure.

Um den Gehalt an 2-Ethylhexansäure im Kühlmittel zu verringern oder zu vermeiden wird diese in einer Ausführungsform ganz oder teilweise, bevorzugt vollständig ersetzt durch mindestens eine andere der oben genannten aliphatischen Monocarbonsäuren, die nicht 2-Ethylhexansäure ist, besonders durch Isononansäure.

In einer bevorzugten Ausführungsform kann 2-Ethylhexansäure auch teilweise ersetzt werden durch eine Kombination von 2-Ethylhexansäure mit Benzoesäure.

In einer bevorzugten Ausführungsform kann 2-Ethylhexansäure auch ganz oder teilweise ersetzt werden durch eine Kombination von 2-Ethylhexansäure mit mindestens einer der oben genannten aliphatischen Dicarbonsäuren, besonders bevorzugt einer Kombination aus von 2-Ethylhexansäure mit Adipinsäure oder 2-Ethylhexansäure mit Sebacinsäure.

Besonders bevorzugt wird ein Gemisch aus mindestens zwei aliphatischen Dicarbonsäuren eingesetzt unter Verzicht auf 2-Ethylhexansäure, beispielsweise ein Gemisch aus Adipinsäure und Sebacinsäure.

Somit stellt es eine bevorzugte Ausführungsform dar, in das Kühlmittel mindestens eine Dicarbonsäure, bevorzugt mindestens eine aliphatische Dicarbonsäure in Abwesenheit von aliphatischen Monocarbonsäuren einzusetzen. Dies ist besonders bei gleichzeitiger Abwesenheit des mindestens einen anorganischen Salzes bevorzugt. Möglich ist bei Abwesenheit des mindestens einen anorganischen Salzes der Einsatz einer Kombination aus mindestens einer Dicarbonsäure, bevorzugt mindestens einer aliphatischen Dicarbonsäure, mit mindestens einer Monocarbonsäure, bevorzugt mindestens einer aliphatischen Monocarbonsäure, besonders bevorzugt ist hier der Einsatz von mindestens einer Dicarbonsäure, bevorzugt mindestens einer aliphatischen Dicarbonsäure, bei gleichzeitiger Abwesenheit von aliphatischen Monocarbonsäuren.

Dicarbonsäuren, besonders die aliphatischen, haben gegenüber aliphatischen Monocarbonsäuren den Vorteil, dass sie in Korrosionstests verschiedener Werkstoffe, wie Eisen, Stahl, Kupfer, Messing und Aluminium, Chelatkomplexe mit Metallionen zu bilden vermögen und so Metallionen in Lösung zu stabilisieren vermögen, so dass diese nicht ausfallen und Belege bilden, die im Kühlsystem den Wärmeübergang verringern oder die Leitungen im Kühlmittelkreislauf verstopfen. Im Fall von Dicarbonsäuren ermöglicht das Vorhandensein von zwei Carbonsäuregruppen die Bildung stärkerer Chelatkomplexe mit Metallionen als Monocarbonsäuren. Die so gebildeten Chelatkomplexe sind ferner wirksam bei der Inhibierung weiterer Korrosion, indem sie verhindern, dass die Metallionen mit der Umgebung reagieren und Korrosionsprodukte bilden. Darüberhinaus sind Dicarbonsäuren weniger flüchtig als Monocarbonsäuren, so dass diese auch bei höherer Temperatur, beispielsweise unter den Bedingungen im Kühlkreislauf, im Kühlmittel verbleiben. Weiterhin weisen aliphatische Monocarbonsäuren mit der Carboxyl- bzw. Carboxylatgruppe ein hydrophiles Ende und dem aliphatischen Alkylrest ein hydrophobes Ende auf, wobei der hydrophobe Einfluss bei langen Alkylresten die Löslichkeit der aliphatischen Monocarbonsäuren im Kühlmittel begrenzen kann. Demgegenüber ist bei Dicarbonsäuren, besonders aliphatischen Dicarbonsäuren und besonders bei den besonders bevorzugten aliphatischen α,ω-Dicarbonsäuren das Verhältnis zwischen hydrophilen Carboxylgruppen und hydrophober verbindender Kette so, dass der hydrophile Einfluss überwiegt. Dies liegt einerseits daran, dass das Verhältnis der Kohlenstoffatome in den Carboxylgruppen zu denen in der aliphatischen Alkylenkette die hydrophilen Eigenschaften begünstigt und andererseits daran, dass sich nicht wie in aliphatischen Monocarbonsäuren ein hydrophiles und ein hydrophobes Ende herausbildet, sondern die hydrophobe Kette an den Enden von den hydrophilen Carboxylgruppen eingerahmt wird.

Ebenfalls besonders bevorzugt ist ein Gemisch aus 2-Ethylhexansäure mit mindestens einem anorganischen Salz ausgewählt aus der Gruppe bestehend aus Molybdaten, Boraten, Phosphaten, Silikaten und Nitraten, ganz besonders bevorzugt ein Gemisch aus 2-Ethylhexansäure mit mindestens einem anorganischen Salz ausgewählt aus der Gruppe bestehend aus Molybdaten, Phosphaten und Silikaten.

Bei den 8 bis 13 Kohlenstoffatome aufweisenden Neoalkancarbonsäuren kann es sich um Isomerengemische handeln und nicht notwendigerweise um reine Isomere.

So ist beispielsweise Neodecansäure ein Gemisch von Carbonsäuren (CAS 26896-20-8) enthaltend 2,2,3,5-Tetramethylhexansäure, 2,4-Dimethyl-2-isopropylpentansäure, 2,5-Dimethyl-2-ethylhexansäure, 2,2-Dimethyloctansäure und/oder 2,2-Diethylhexansäure.

In einer bevorzugten Ausführungsform handelt es sich bei der aliphatischen Carbonsäure um Isononansäure. Im Rahmen dieser Schrift bezieht sich dies auf eine oder mehrere verzweigte aliphatische Carbonsäuren mit 9 Kohlenstoffatomen. Ausführungsform von Isononansäure können 7-Methyloctansäure (z.B. CAS Nr. 693-19-6 und 26896-18-4), 6,6-Dimethylheptansäure (z.B. CAS Nr. 15898-92-7), 3,5,5-Trimethylhexansäure (z.B. CAS Nr. 3302-10-1), 3,4,5-Trimethylhexansäure, 2,5,5-Trimethylhexansäure, 2,2,4,4-Tetramethylpentansäure (z.B. CAS Nr. 3302-12-3) und Gemische daraus umfassen. In einer bevorzugten Ausführungsform enthält Isononansäure als Hauptkomponenten von mehr als 90% (in Summe) mindestens eine Carbonsäure ausgewählt aus der Gruppe bestehend aus 7-Methyloctansäure, 6,6-Dimethylheptansäure, 3,5,5-Trimethylhexansäure, 3,4,5-Trimethylhexansäure, 2,5,5-Trimethylhexansäure und 2,2,4,4-Tetramethylpentansäure auf. Der zu 100% fehlende Anteil kann andere Carbonsäuren mit 9 Kohlenstoffatomen umfassen und geringe Anteil von Nebenprodukten. In einer bevorzugten Ausführungsform enthält Isononansäure als Hauptkomponente zu mindestens 90%, bevorzugt zu mindestens 95% 3,5,5-Trimethylhexansäure.

Bei den 4 bis 20 Kohlenstoffatome aufweisenden organischen Dicarbonsäuren handelt es sich um lineare oder verzweigte Alkandicarbonsäuren, bevorzugt lineare Alkan- oder Alkendicarbonsäuren, besonders bevorzugt Alkandicarbonsäuren, besonders bevorzugt mit 5 bis 14 und ganz besonders bevorzugt mit 6 bis 12 Kohlenstoffatomen.

Bevorzugt sind die aliphatischen Dicarbonsäuren ausgewählt aus der Gruppe bestehend aus Bernsteinsäure, Maleinsäure, Fumarsäure, Glutarsäure, Adipinsäure, Pimelinsäure (Heptandisäure), Azelainsäure (Nonandisäure), Sebacinsäure (Dekandisäure), Undekandisäure, Dodekandisäure, sowie Alkyl- und Alkenylbernsteinsäuren und - glutarsäuren wie 2-Methylbutandisäure, 2-ethyl-3-methylbutandisäure, 2-Ethylpentandisäure, 2-Dodecylbutandisäure, 2-Dodecenylbutandisäure, 2-Phenylbutandisäure, 2-(p-Methyl phenyl) butandisäure, 2,2-Dimethylbutandisäure, 2,3,4-Trimethylpentandisäure, 2,2,3-Trimethylpentandisäure, Glutaconsäure (Pent-2-endisäure), Itaconsäure, Hex-2-endisäure, Hex-3-endisäure, 5-Methyl-hex-2-endisäure und 2,3-Diemethyl-pent-2-endisäure.

Unter diesen sind die Dicarbonsäuren bevorzugt, die 6 bis 12 Kohlenstoffatome aufweisen, besonders bevorzugt unter diesen die Alkandicarbonsäuren, die 6 bis 12 Kohlenstoffatome aufweisen, ganz besonders bevorzugt die linearen Alkandicarbonsäuren, die 6 bis 12 Kohlenstoffatome aufweisen.

Insbesondere bevorzugt sind als aliphatische Dicarbonsäuren Adipinsäure, Sebacinsäure, Azelainsäure und Dodecandicarbonsäure, speziell Adipinsäure, Sebacinsäure und Dodekandisäure, und am meisten Adipinsäure und Sebacinsäure.

### Anorganisches Salz

Die anorganischen Salze werden häufig als Korrosionsinhibitoren gegen die Korrosion von Eisen- und/oder Aluminium-haltigen Werkstoffen sowie Lot eingesetzt.

Das mindestens eine anorganische Salz ist ausgewählt aus der Gruppe bestehend aus Molybdaten, Boraten, Phosphaten, Silikaten, Nitriten und Nitraten, bevorzugt ausgewählt aus der Gruppe bestehend aus Boraten, Phosphaten, Silikaten, Nitriten und Nitraten, besonders bevorzugt ausgewählt aus der Gruppe bestehend aus Phosphaten, Silikaten, und Nitraten.

Bei den anorganischen Inhibitoren handelt es sich um Phosphate, Silikate, Borate, Nitriten, Nitrate oder Molybdate, oder deren Mischungen in Form ihrer freien Säuren oder ihrer Salze, besonders ihrer Alkalimetallsalze, besonders bevorzugt ihrer Natrium- oder Kaliumsalze. In welcher Form (protoniert oder als Salz) sie in den Zusammensetzungen, Superkonzentraten, Konzentraten oder Kühlmitteln vorliegen hängt von dem jeweiligen pKₛ-Wert der Verbindung und der Zusammensetzung sowie dem pH des jeweiligen Milieus ab, der sich durch die Menge an Base einstellt.

Die Molybdate werden als freie Säure (H₂MoO₄), als Hydrogenmolybdat oder bevorzugt als Molybdat eingesetzt, besonders als Alkalimetallsalze, besonders bevorzugt als Natrium- oder Kaliumsalze und ganz besonders bevorzugt als Natriumsalze. Dabei können die aciden Protonen in den Molybdaten teilweise oder vollständig durch Alkalimetallsalze ersetzt sein. Bevorzugt ist der Einsatz von Natriummolybdat, meist in Form des Dihydrates.

Die Borate werden bevorzugt als Natriumtetraborat (Borax) oder als Kaliumtetraborat eingesetzt, besonders bevorzugt als Natriumtetraborat.

Die Phosphate werden als freie Säure (H₃PO₄), als Hydrogenphosphat, Dihydrogenphosphat oder Phosphat eingesetzt, besonders als Alkalimetallsalze, besonders bevorzugt als Natrium- oder Kaliumsalze. Dabei können die aciden Protonen in den Phosphaten teilweise oder vollständig durch Alkalimetallsalze ersetzt sein.

Denkbar ist auch der Einsatz der entsprechenden Diphosphate, Triphosphate oder Oligophosphate, auch in Mischungen mit Monophosphaten, bevorzugt werden sie jedoch als monomere Phosphate eingesetzt.

Bevorzugt ist der Einsatz als freie Säure (H₃PO₄), Dinatriumhydrogenphosphat oder Trinatriumphosphat.

Die anorganischen Silikate wirken überwiegend als Inhibitor der Korrosion von Aluminium und Aluminium-haltigen Werkstoffen sowie Lot und werden meist als Alkalimetallsalze oder seltener als Magnesium-, Calcium- oder Aluminiumsalze eingesetzt, bevorzugt als Natrium- oder Kaliumsalze.

Die Silikate sind bevorzugt ausgewählt aus der Gruppe bestehend aus Orthosilikaten (SiO₄⁴⁻), Metasilikaten (SiO₃²⁻), and Pyrosilikaten (Si₂O₇⁶⁻), besonders bevorzugt handelt es sich um Metasilikate (SiO₃²⁻), ganz besonders bevorzugt um Natriummetasilikat (Na₂SiO₃) oder Kaliummetasilikat (K₂SiO₃), insbesondere um Natriummetasilikat (Na₂SiO₃).

Bei den Nitriten handelt es sich um sämtliche anorganische Salze des Nitritanions (NO₂⁻) sowie Salpetrigsäure (HNO₂). Typischerweise wird Nitrit in Form von Natriumnitrit oder Kaliumnitrit in Kühlmitteln eingesetzt oder wird durch die anorganischen Basen, bevorzugt Natriumhydroxid oder Kaliumhydroxid, in diese überführt.

In einer bevorzugten Ausführungsform enthalten die Kühlmittel aus gesundheitlichen Gründen kein Nitrit.

Die Nitrate werden als Alkali- oder Erdalkalimetallnitrate eingesetzt, bevorzugt als Natriumnitrat, Kaliumnitrat oder Magnesiumnitrat, bevorzugt als Natriumnitrat oder Kaliumnitrat, besonders bevorzugt als Natriumnitrat.

Bevorzugte anorganische Salze sind ausgewählt aus der Gruppe bestehend aus Molybdaten, Boraten, Phosphaten, Silikaten und Nitraten, besonders bevorzugt ausgewählt aus der Gruppe bestehend aus Molybdaten, Boraten, Phosphaten und Silikaten, ganz besonders bevorzugt ausgewählt aus der Gruppe bestehend aus Molybdaten, Phosphaten und Silikaten.

### Azolverbindung

Die Azolverbindungen wirken besonders als Korrosionsinhibitor gegen die Korrosion von Buntmetallen, beispielsweise Messing oder Kupfer.

Unter Azolverbindungen oder Azolderivaten werden im Rahmen dieser Schrift fünfgliedrige heterocyclische Verbindungen mit 2 oder 3 Heteroatomen aus der Gruppe Stickstoff und Schwefel, welche kein oder maximal ein Schwefelatom in den Ring eingebaut enthalten und welche optional einen aromatischen oder gesättigten sechsgliedrigen Anellanten tragen können.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 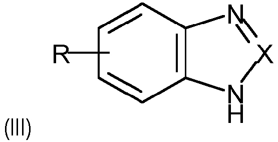 oder 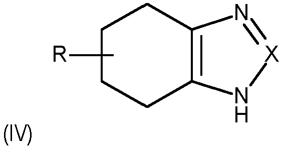
in denen die Variable
R Wasserstoff oder einen C₁- bis C₁₀-Alkylrest, insbesondere Methyl oder Ethyl, bedeutet und
die Variable X ein Stickstoffatom oder die Gruppierung C-H bezeichnet.

Typische und bevorzugte Beispiele für Azolderivate der allgemeinen Formel (III) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (IV) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (V) 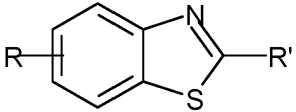
in der
   die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe (-SH) bezeichnet. Denkbar, wenn auch weniger bevorzugt kann R' auch ein Carboxyalkylrest der Formel -(CₘH₂ₘ)-COOR" sein, wobei m für eine Zahl von 1 bis 4 steht und R" Wasserstoff oder C₁- bis C₁₀-Alkyl, insbesondere Methyl oder Ethyl, oder C₆- bis C₁₂-Aryl bedeutet. Beispiele dafür sind (2-Benzothiazylthio)-essigsäure, (2-Benzothiazylthio)-essigsäure ester, 3-(2-Benzothiazylthio)-propionsäure oder 3-(2-Benzothiazylthio)-propionsäure ester. Für den Fall, dass diese Verbindungen als Säure eingesetzt werden, so zählen sie nicht zu den erfindungsgemäß ausgeschlossenen Carbonsäuren. Ein typisches Beispiel für ein Azolderivat der allgemeinen Formel (V) ist 2-Mercaptobenzthiazol.

Weiterhin werden nicht-anellierte Azolderivate der allgemeinen Formel (VI) 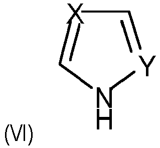
in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, hydriertes Tolutriazol oder Mischungen hieraus, insbesondere Benzotriazol oder Tolutriazol, speziell Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 zugänglich und auch kommerziell verfügbar.

Bevorzugt sind die Azole ausgewählt aus der Gruppe bestehend aus Benzotriazol, Tolutriazol, (2-Benzothiazylthio)-essigsäure, 3-(2-Benzothiazylthio)-propionsäure und 2-Mercaptobenzthiazol.

### Wasser

Das im Rahmen der vorliegenden Erfindung eingesetzte Wasser sollte neutral mit einem pH-Wert um 7 sein, dabei kann es sich um demineralisiertes oder destilliertes Wasser handeln, was jedoch nicht zwingend erforderlich ist. Um den Einsatz auch harten Wassers zu ermöglichen, kann der Kühlmittelzusammensetzung mindestens ein Hartwasserstabilisator zugesetzt werden.

Das eingesetzte Wasser kann Erdalkalimetallionen enthalten, beispielsweise Magnesium-, Calcium-, Strontium- oder Bariumionen, wobei letztere üblicherweise höchstens in Spuren enthalten sind. Bevorzugt sind als Härtebildner im wesentlichen lediglich Magnesium- und/oder Calciumionen enthalten.

Bei dem eingesetzten Wasser handelt es sich bevorzugt um weiches Wasser mit einer Wasserhärte von nicht mehr als 8,4 °dH, besonders bevorzugt von nicht mehr als 10 und ganz besonders bevorzugt nicht mehr als 12 °dH.

Bei Einsatz von Wasser mit einer Wasserhärte von bis zu 14 °dH, bevorzugt bis zu 17, besonders bevorzugt bis zu 20 und sogar bis zu 25 °dH ist in der Regel ein Hartwasserstabilisator erforderlich.

Das im Kühlmittel eingesetzte Wasser ist über die Härtebildner die übliche Quelle für eventuell in dem Kühlmittel enthaltenes Carbonat und/oder Sulfat.

### Kieselsäureester

Anstelle oder zusätzlich zu den genannten anorganischen Silikaten können die Kühlmittel auch organische ortho-Kieselsäureester der allgemeinen Formel Si(OR)₄ enthalten, worin jedes R unabhängig voneinander C₁-C₄-Alkyl, bevorzugt Methyl, Ethyl oder n-Butyl, besonders bevorzugt Methyl oder Ethyl oder Gemische aus Methyl und Ethyl bedeuten.

Die ortho-Kieselsäureester wirken überwiegend als Inhibitor der Korrosion von Aluminium oder Aluminium-haltigen Werkstoffen sowie Lot.

### Silikophosphonat

Wenn die Zusammensetzung mindestens ein anorganisches Silikat enthält, so wird in einer bevorzugten Ausführungsform zusätzlich zu dem Silikat mindestens ein Silicophosphonat zudosiert, wie es beschrieben ist in der Europäischen Patentanmeldung EP 4015596.

Bevorzugt handelt es sich bei dem Silicophosphonat um eine Verbindung der allgemeinen Formel 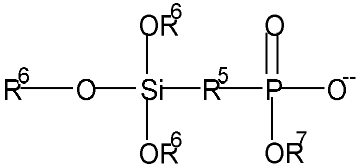 worin
R⁵ ein zweibindiger organischer Rest ist, bevorzugt eine 1,ω-Alkylen Gruppe mit 1 bis 6, bevorzugt 1 bis 4 Kohlenstoffatomen, besonders bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wasserstoff, C₁- bis C₄-Alkyl oder Hydroxy-C₂- bis C₄-Alkyl, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, besonders bevorzugt Wasserstoff, Methyl, Ethyl oder Propyl,
und R⁷ ist C₁- bis C₄-Alkyl, bevorzugt Methyl, Ethyl, n-Propyl oder n-Butyl, besonders bevorzugt Methyl, Ethyl oder n-Butyl, ganz besonders bevorzugt Methyl oder Ethyl und insbesondere Methyl.

Die Silicophosphonate können als freie Säure oder als Alkalimetallsalz eingesetzt werden, bevorzugt als Natrium-oder Kaliumsalz und besonders bevorzugt als Natriumsalz.

### Weitere Inhibitoren und kühlmitteltypische Bestandteile

Als weitere übliche Hilfsmittel können die Kühlmitte optional in üblichen geringen Mengen noch Entschäumer (in der Regel in Mengen von 0,003 bis 0,008 Gew.-% in dem fertig verdünnten Kühlmittel) sowie aus Gründen der Hygiene und der Sicherheit im Falle eines Verschluckens Bitterstoffe (z. B. vom Typ Denatoniumbenzoat) und Farbstoffe enthalten.

Ferner können die Zusammensetzung einen oder mehrere Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten. Der Anteil in der Zusammensetzung werden so gewählt, dass nach entsprechender Verdünnung die Menge in dem fertig verdünnten Kühlmittel bis zu 1 Gew.-% beträgt.

In einer bevorzugten Ausführungsform handelt es sich um einen Hartwasserstabilisator wie beschrieben in der WO 2022/200155.

Es stellt einen Vorteil des Einsatzes von Hartwasserstabilisatoren dar, dass die Verwendung von demineralisiertem oder destilliertem Wasser nicht erforderlich ist, um die Ausfällungen von Erdalkalimetallverbindungen zu verringern oder zu verhindern.

### Zusammensetzung der Kühlmittel

Die in den Windkraftanlagen einsatzbereiten Kühlmittel werden bevorzugt durch Verdünnung von Konzentraten (siehe unten) mit Wasser hergestellt und sind beispielsweise zusammengesetzt wie folgt:
- 40 bis 75 Gew% Wasser, bevorzugt 45 bis 70, besonders bevorzugt 50 bis 70, ganz besonders bevorzugt 55 bis 67,5 und insbesondere 60 bis 65 Gew%,
- 20 bis 55 Gew% Alkylenglykol, Alkylenglykolmonoalkylether und Glycerin, bevorzugt 25 bis 50, besonders bevorzugt 25 bis 45, ganz besonders bevorzugt 30 bis 50 und insbesondere mindestens 32,5 bis 35 Gew%,
- in Summe 0,1 bis 5 Gew%, bevorzugt 0,25 bis 4,5, ganz besonders bevorzugt 0,5 bis 4 und insbesondere 1 bis 4 Gew% der folgenden Komponenten:
   -- optional mindestens eine organische Mono- oder Dicarbonsäure, bevorzugt aliphatische Mono- oder Dicarbonsäure,
   -- optional mindestens ein anorganisches Salz ausgewählt aus der Gruppe bestehend aus Molybdaten, Boraten, Phosphaten, Silikaten, Nitriten und Nitraten,
   -- mindestens eine Azolverbindung
   -- optional mindestens einen Kieselsäureester,
   -- optional mindestens ein Silikophosphonat, sofern Silikate anwesend sind, sowie
- optional 0 bis zu 1 Gew%, bevorzugt 0 bis zu 0,75, besonders bevorzugt 0,05 bis 0,5, ganz besonders bevorzugt 0,1 bis 0,4 und insbesondere 0,2 bis 0,3 Gew% weitere Inhibitoren und kühlmitteltypische Bestandteile,

mit der Maßgabe, dass mindestens eine Mono- oder Dicarbonsäure und/oder mindestens ein anorganisches Salz in dem Kühlmittel anwesend sind,
mit der Maßgabe, dass die Summe aller Komponenten stets 100 Gew% ergibt.

In einer bevorzugten Ausführungsform enthält das Kühlmittel
- mindestens ein Alkylenglykol, Alkylenglykolmonoalkylether oder Glycerin, bevorzugt Monoethylenglykol
- mindestens eine aromatische organische Monocarbonsäure,
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure oder besonders bevorzugt mindestens zwei aliphatische Dicarbonsäuren, insbesondere mindestens zwei aliphatische Dicarbonsäuren unter Verzicht auf 2-Ethylhexansäure, und speziell mindestens zwei aliphatische Dicarbonsäuren unter Verzicht auf Monocarbonsäuren,
- mindestens eine Azolverbindung
- Wasser
- optional Hartwasserstabilisator, Bitterstoff, Entschäumer und/oder Farbstoff,
mit der Maßgabe, dass kein anorganisches Salz ausgewählt aus der Gruppe bestehend aus Molybdaten, Boraten, Phosphaten, Silikaten, Nitriten und Nitraten in dem Kühlmittel anwesend sind.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure,
- mindestens ein anorganisches Salz ausgewählt aus der Gruppe bestehend aus Boraten, Phosphaten, Silikaten, Nitriten und Nitraten,
- mindestens eine Azolverbindung
- Wasser
- optional Hartwasserstabilisator, Bitterstoff, Entschäumer und/oder Farbstoff.

In einer gleichermaßen bevorzugten Ausführungsform enthält das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure, besonders bevorzugt mindestens eine aliphatische Monocarbonsäure und mindestens eine aliphatische Dicarbonsäure oder besonders bevorzugt mindestens zwei aliphatische Dicarbonsäuren,
- mindestens ein anorganisches Salz ausgewählt aus der Gruppe bestehend aus Molybdaten, Boraten, Phosphaten, Silikaten und Nitraten, bevorzugt ausgewählt aus der Gruppe bestehend aus Phosphaten und Silikaten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.

In den beiden letztgenannten Ausführungsformen umfasst das anorganische Salz bevorzugt mindestens ein Silikat, besonders bevorzugt sind außer Silikat keine weiteren anorganischen Salze enthalten.

In diesen genannten Ausführungsformen handelt es sich bei den Azolverbindungen bevorzugt um Benzotriazol oder Tolutriazol.

Bei den nicht-aliphatischen organischen Monocarbonsäuren handelt es sich bevorzugt um Benzoesäure.

Die aliphatischen Monocarbonsäuren sind bevorzugt ausgewählt aus der Gruppe bestehend aus 2-Ethylhexansäure und Isononansäure, besonders bevorzugt Isononansäure.

Die aliphatischen Dicarbonsäuren sind bevorzugt ausgewählt aus der Gruppe bestehend aus Adipinsäure, Sebacinsäure und Dodekandisäure.

Die anorganischen Salze sind bevorzugt ausgewählt aus der Gruppe bestehend aus Molybdaten, Boraten, Phosphaten und Silikaten, besonders bevorzugt ausgewählt aus der Gruppe bestehend aus Molybdaten, Phosphaten und Silikaten, ganz besonders bevorzugt ausgewählt aus der Gruppe bestehend aus Phosphaten und Silikaten.

Das Kühlmittel sollte bei einer Temperatur von 20 °C eine kinematische Viskosität gemäß ASTM D445 von 3 mm²/s nicht überschreiten, bevorzugt nicht mehr als 2,5, besonders bevorzugt nicht mehr als 2 mm²/s, ganz besonders bevorzugt nicht mehr als 1.5 und insbesondere nicht mehr als 1 mm²/s.

Bei einer Temperatur von 0 °C sollte das Kühlmittel eine kinematische Viskosität gemäß ASTM D445 von 7,5 mm²/s nicht überschreiten, bevorzugt nicht mehr als 7, besonders bevorzugt nicht mehr als 6 mm²/s, ganz besonders bevorzugt nicht mehr als 5,5 und insbesondere nicht mehr als 5 mm²/s.

Bei einer Temperatur von 80 °C sollte das Kühlmittel eine kinematische Viskosität gemäß ASTM D445 von 1 mm²/s nicht überschreiten, bevorzugt nicht mehr als 0,9, besonders bevorzugt nicht mehr als 0,8 mm²/s, ganz besonders bevorzugt nicht mehr als 0,7 und insbesondere nicht mehr als 0,6 mm²/s.

Um die zu transportierenden Volumina zu verringern, werden zumeist Konzentrate vertrieben, in denen der Wasseranteil weggelassen oder stark reduziert wird. Die Kühlmittel werden dann vor Befüllen der Windkraftanlage aus den Konzentraten durch Wasserzugabe hergestellt. Üblicherweise werden diese Konzentrate im Volumenverhältnis 1 : 1 bis 1 : 3 (Vol/Vol), bevorzugt 1 : 1 bis 1 : 2 mit Wasser verdünnt, je nach der herrschenden Temperatur vor Ort und Anforderungen an den Gefrierschutz.

Die Konzentrate sind dementsprechend zusammengesetzt wie die oben angeführten Kühlmittel, jedoch mit einem je nach Verdünnungsverhältnis verringerten Wasseranteil. In der Regel beträgt der Wasseranteil im Konzentrat nicht mehr als 15, bevorzugt nicht mehr als 10 und besonders bevorzugt nicht mehr als 5 Gew%.

Beispielsweise sind die Konzentrate zusammengesetzt wie folgt:
- 0,1 bis 15 Gew% Wasser
- 50 bis 95 Gew% Alkylenglykol, Alkylenglykolmonoalkylether und Glycerin,
- in Summe 0,5 bis 15 Gew% der folgenden Komponenten:
   -- optional mindestens eine organische Mono- oder Dicarbonsäure, bevorzugt aliphatische Mono- oder Dicarbonsäure,
   -- optional mindestens ein anorganisches Salz ausgewählt aus der Gruppe bestehend aus Molybdaten, Boraten, Phosphaten, Silikaten, Nitriten und Nitraten,
   -- mindestens eine Azolverbindung
   -- optional mindestens einen Kieselsäureester,
   -- optional mindestens ein Silikophosphonat, sofern Silikate anwesend sind, sowie
- optional 0 bis zu 3 Gew% weitere Inhibitoren und kühlmitteltypische Bestandteile,

unter Ausschluss einer Kombination aus alkoxyliertem acetylenischen Alkohol und Korrosionsinhibitoren mit Imidazolinstruktur im Kühlmittel,
mit der Maßgabe, dass mindestens eine Mono- oder Dicarbonsäure und/oder mindestens ein anorganisches Salz in dem Kühlmittel anwesend sind,
und mit der weiteren Maßgabe, dass bei Abwesenheit des mindestens einen anorganischen Salzes mindestens eine Dicarbonsäure, bevorzugt mindestens eine aliphatische Dicarbonsäure in dem Kühlmittel anwesend ist,
mit der Maßgabe, dass die Summe aller Komponenten stets 100 Gew% ergibt.

Der pH-Wert der Kühlmittel beim Endanwender liegt üblicherweise im Bereich von 4 bis 11,5, vorzugsweise 5 bis 10, insbesondere 6 bis 9.

Um diesen pH-Wert einzustellen werden bei dem Herstellungsverfahren der Kühlmittel aus einer konzentrierten Vorstufe auf einer beliebigen Stufe mindestens eine anorganische Base zugegeben. Dabei kann die mindestens eine anorganische Base im Kühlmittel oder im Konzentrat enthalten sein oder bei der Herstellung des Kühlmittels aus dem Konzentrat durch Vermischen mit Wasser zugegeben werden.

Bevorzugte anorganische Basen sind Alkalimetallhydroxide, besonders bevorzugt festes Lithium-, Natrium- oder Kaliumhydroxid, gegebenenfalls auch in Form von wässriger Lithium-, Natron- oder Kalilauge.

Weniger bevorzugt sind Carbonate oder Hydrogencarbonate des Lithium, Natrium oder Kalium.

Bevorzugte Alkalimetalle sind Natrium und Kalium.

Die elektrische Leitfähigkeit der Kühlmittel spielt erfindungsgemäß eine untergeordnete Rolle uns kann bis zu 3000 µS/cm (gemessen gemäß ASTM D 1125 bei 25 °C) betragen, bevorzugt bis zu 2500, besonders bevorzugt bis zu 2000, ganz besonders bevorzugt bis zu 1500 und insbesondere bis zu 1000 µS/cm.

Es ist denkbar, das Kühlmittel durch Verdünnen der Konzentrate mit Wasser in dem gewünschten Verdünnungsverhältnis direkt beim Betanken der Windkraftanlage herzustellen. Dies hat jedoch den Nachteil, dass sowohl Wasser als auch Konzentrat zur Windkraftanlage transportiert und dort z.B. über Pumpen oder statische Mischer im korrekten Verhältnis vermischt werden müssen. Die Vermischung des Konzentrats mit Wasser erfolgt in der Regel durch Energieeintrag durch Scherenergie. Dies kann beispielsweise in dynamischen Mischapparaten, d.h. durch Vermischen mittels Rührer oder durch Umpumpen (Naturumlauf oder Zwangsumlauf) bzw. Umpumpen mit statischen Mischorganen wie statischen Mischern oder Düsen im Umpumpkreis, durch statische Mischapparate wie statische Mischer, Düsen, Blenden, Y- oder T-Stücke im Zulauf des Ansatzbehälters, oder durch dynamische Mischapparate wie Mischpumpen oder Rührkessel erfolgen.

Daher werden üblicherweise die Kühlmittel an einem ersten Ort, z.B. bei einem Formulierer durch Vermischen der Konzentrate mit Wasser in dem gewünschten Verdünnungsverhältnis hergestellt, das mit Wasser verdünnte Kühlmittel dann zur Windkraftanlage an einen zweiten Ort transportiert und dort das Kühlsystem der Windkraftanlage mit dem fertig abgemischten Kühlmittel betankt.

Bei neu zu errichtenden Windkraftanlagen ist dieser zweite Ort zumeist der Montageort für die Gondel.

Bei bestehenden Windkraftanlagen ist der zweite Ort der Standort der Windkraftanlage, also bei offshore-Anlagen auf See bzw. bei onshore-Anlagen an Land.

Die Befüllung von bestehenden Windkraftanlagen erfolgt bei Umgebungstemperatur, bevorzugt bei einer Temperatur von 15 bis 35 °C. Eine Temperatur von -10 °C sollte nicht unterschritten werden. Da das Kühlmittel in der Regel auf die Höhe der Gondel der Windkraftanlage gefördert werden muss, wo sich das Kühlsystem befindet, und sich diese Gondel auf einer Höhe von 50 bis 150 m befindet, Planungen reichen sogar bis zu 200 m, sollte die Temperatur des Kühlmittels beim Befüllen des Kühlsystems der Windkraftanlage so beschaffen sein, dass die Viskosität des Kühlmittels bei der Fördertemperatur 3 mm²/s nicht überschreitet, bevorzugt nicht mehr als 2,5, besonders bevorzugt nicht mehr als 2 mm²/s, ganz besonders bevorzugt nicht mehr als 1.5 und insbesondere nicht mehr als 1 mm²/s, da ansonsten das Kühlmittel nur schwer auf diese Höhe pumpbar ist. Eine niedrige Viskosität ist anzustreben, da dies eine geringere Pumpenleistung erforderlich macht und bei schnelllaufenden Pumpen beispielsweise zu Kavitation führen kann. Sollte die Viskosität des Kühlmittels für die Förderung per Pumpe zu hoch sein, so kann es sinnvoll sein, das Kühlmittel leicht zu erwärmen, um die Viskosität zu senken und das so erwärmte Kühlmittel dann in einem isolierten oder thermostatierten Behälter zur Windkraftanlage zu transportieren. In der Regel ist dafür eine Temperatur des Kühlmittels bis zu 25 °C über der Umgebungstemperatur ausreichend, bevorzugt bis zu 20, besonders bevorzugt bis zu 15 und ganz besonders bevorzugt bis zu 10 °C.

Alternativ kann das Kühlmittel auch in einem geeigneten Behälter per Kran oder Aufzug auf die Höhe des Kühlmitteltanks der Windkraftanlage transportiert und dort ausgetauscht werden. Dies ist besonders dann bevorzugt, wenn das Kühlmittel zum Pumpen zu hochviskos ist oder eine entsprechende Pumpe nicht verfügbar ist.

Das gebrauchte Kühlmittel wird nach dem Austausch gesammelt und kann beispielsweise über Kläranlagen entsorgt oder wiedergewonnen werden.

### Windkraftanlage

Die zu kühlenden Bestandteile von Windkraftanlagen umfassen in der Regel zumindest einen ausgewählt aus der Gruppe bestehend aus Generator, Getriebe, Lager, Umrichter und Stellsystem.

Im Getriebe wird die niedrige Drehzahl des Rotors in eine hohe Drehzahl für den Generator übersetzt mit der Folge, dass kleinere Generatoren eingesetzt werden können. Es ist jedoch auch möglich, eine Windkraftanlage ohne Getriebe zu betreiben. In diesem Fall ist der Generator direkt an den Rotor gekoppelt und dreht sich mit der gleichen Drehzahl wie der Rotor. Dies ist konstruktiv einfacher, da auf das Getriebe verzichtet werden kann, jedoch müssen die Generatoren in getriebelosen Windkraftanlagen deutlich größer ausgelegt werden.

Somit ist das Getriebe nicht notwendigerweise bei jeder Windkraftanlage vorhanden.

Mit dem zumeist hydraulischen Stellsystem wird der Rotor durch die Steuerung der Windkraftanlage in der Regel automatisch zur Optimierung der Stromerzeugung in den Wind gedreht (Windnachführung). Dies umfasst sowohl die Ausrichtung der Nabe zur Windrichtung als auch den Anstellwinkel der Rotorblätter in den Wind. Bei zu hohen Windstärken kann der Rotor zum Schutz der Anlage auch aus dem Wind bzw. die Rotorblätter in sogenannte Segelstellung gedreht werden.

Es stellt eine bevorzugte Ausführungsform dar, Getriebe (sofern vorhanden) und/oder Stellsystem der Windkraftanlage zu kühlen und die dort erzeugte Wärme über das Kühlmittel abzuführen. In einer besonders bevorzugten Ausführungsform werden Getriebe und Stellsystem in einem gemeinsamen Kühlkreislauf gekühlt.

Der Rotor wird durch die kinetische Energie des Windes in eine Drehbewegung versetzt und treibt einen Generator im Inneren der Gondel an, der wiederum die mechanische Energie in elektrische Energie umwandelt. Der durch den Generator erzeugte Strom kann nun in das Stromnetz eingespeist werden. Bei den meisten Anlagen sorgt ein Umrichter dafür, dass der eingespeiste Strom die für das nationale bzw. regionale Stromnetz erforderliche Frequenz von zumeist 50 bis 60 Hertz hat.

Es stellt eine bevorzugte Ausführungsform dar, Generator und/oder Umrichter der Windkraftanlage zu kühlen und die dort erzeugte Wärme über das Kühlmittel abzuführen. In einer besonders bevorzugten Ausführungsform werden Generator und Umrichter in einem gemeinsamen Kühlkreislauf gekühlt.

Ein weiterer Gegenstand der vorliegenden Erfindung ist ein Verfahren zum Wärmemanagement von Bestandteilen von Windkraftanlagen, in dem Wärme von mindestens einem Bestandteil einer Windkraftanlage ausgewählt aus der Gruppe bestehend aus
- Generator,
- Getriebe,
- Lager,
- Umrichter und
- Stellsystem
   bei einer höheren Temperatur über mindestens einen ersten Wärmetauscher auf ein Kühlmittel wie oben beschrieben übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, in dem
- als Kühlmittel eine Zusammensetzung wie oben beschrieben eingesetzt wird,
- die höhere Temperatur von 20 bis 100 °C, bevorzugt 25 bis 80, besonders bevorzugt 30 bis 60 °C beträgt,
- die niedrigere Temperatur von minus 50 bis 40 °C, bevorzugt minus 40 bis 40, besonders bevorzugt minus 30 bis 35 °C beträgt und
- die niedrigere Temperatur mindestens 5 °C, bevorzugt mindestens 10, besonders bevorzugt mindestens 15 und ganz besonders bevorzugt mindestens 20 °C niedriger liegt als die höhere Temperatur.

Dabei handelt es sich bei der höheren Temperatur bevorzugt um die Wandtemperaturen des jeweiligen Bestandteils der Windkraftanlage während des üblichen Betriebes der Windkraftanlage.

Die niedrigere Temperatur ist dabei bevorzugt die Umgebungstemperatur, mit der das erwärmte Kühlmittel im zweiten Wärmetauscher in Kontakt gebracht wird.

Es ist möglich, wenn auch weniger bevorzugt, dass bei offshore Windkraftanlagen die niedrigere Temperatur diejenige von Meerwasser am Standort der Windkraftanlage ist. In diesem Fall liegt die niedrigere Temperatur bei 0 bis 30 °C, bevorzugt 1 bis 25, besonders bevorzugt 2 bis 20 und ganz besonders bevorzugt 3 bis 15 °C.

Es stellt einen Vorteil der in dieser Schrift beschriebenen Kühlmittel dar, dass die Windkraftanlagen mit diesen Kühlmitteln in der Regel mindestens 5, bevorzugt mindestens 7, besonders bevorzugt mindestens 8 und ganz besonders bevorzugt mindestens 10 Jahre betrieben werden können, ohne dass ein Wechsel des Kühlmittels erforderlich ist. Es ist sogar denkbar, dass das Kühlmittel während der gesamten Betriebsdauer der Windkraftanlage nicht ausgetauscht werden muss, also bis zu 25, bevorzugt bis zu 30 Jahren.

Bei allen Wärmetauschern kann es sich um an sich bekannte Bauteile handeln, die dem Fachmann für diese Zwecke bekannt sind.

Angaben zu Prozent, ppm oder Teilen in dieser Schrift beziehen sich auf Gew%, Gew.ppm oder Gewichtsteile, sofern nicht anders angegeben.

Viskositätsangaben in dieser Schrift beziehen sich auf ASTM D445 bei 20 °C, sofern nicht anders angegeben.

### Beispiele

Ein erfindungsgemäßes Kühlmittel 1 basierend auf Ethylenglykol mit einer Mischung aus Adipinsäure, Sebacinsäure und Tolutriazol als Inhibitorkomponenten wie beschrieben in den Beispielen der WO 02/90462 A1 einem Korrosionstest gemäß ASTM D 1384 (Glassware Corrosion Test, 336 Stunden bei 88 °C, 33 %ige Lösungen) unterzogen. Negative Werte bedeuten eine Zunahme des Gewichts des Prüfkörpers.

Des weiteren wurde ein Kühlmittel 2, basierend auf Ethylenglykol mit einer Mischung von Molybdat, 2-Ethylhexansäuren und Tolutriazol einem Korrosionstest gemäß ASTM D 1384 unterzogen. Bei dieser Untersuchung wurden jeweils drei Metallplättchen jeder Probe in den Test eingesetzt und die Ergebnisse des Wägeverlustes auf eine signifikante Stelle ohne Nachkommastelle gerundet.

Als weniger bevorzugtes Kühlmittel 0 wurde ein kommerziell verfügbares Produkt herangezogen, das mit einer Schutzwirkung von 6 Jahren in stationären Anlagen beworben wird. Windkraftanlagen werden nicht erwähnt. Dieses Produkt enthält laut Sicherheitsdatenblatt 2-Ethylhexansäure als Inhibitorkomponente und ist laut den zugehörigen Produktinformationen frei von Nitrit, Aminen, Phosphat, Borat und Silikat. Ferner enthält dieses Kühlmittel vermutlich noch Sebacinsäure.

Kühlmittel 3 basiert auf Ethylenglykol mit einer Mischung von Natriumbenzoat, Nitrit, Borat, Silikat und Benzotriazol und wurde einem Korrosionstest gemäß ASTM D 1384 unterzogen.

Kühlmittel 4 basiert auf Ethylenglykol mit einer Mischung von Silikat, Borat, organischen Säuren (Sebazinsäure und 2-Ethylhexansäure) und Benzotriazol und wurde einem Korrosionstest gemäß ASTM D 1384 unterzogen.

Kühlmittel 5 basiert auf Ethylenglykol mit einer Mischung von Silikat, organischen Säuren (Sebazinsäure, Adipinsäure und Dodekandisäure) und Tolutriazol und wurde einem Korrosionstest gemäß ASTM D 1384 unterzogen.

| | Kühlmittel 0 *) | Kühlmittel 1 | Kühlmittel 2 | |
|---|---|---|---|---|
| | Abtrag | Abtrag | Abtrag | Grenze gemäß ASTM D 3306 |
| | mg/Prüfkörper | mg/Prüfkörper | mg/Prüfkörper | mg/Prüfkörper |
| Kupfer | 1,9 | -0,8 | 1 | 10 max |
| Weichlot | 0,1 | -1,2 | -1 | 30 max |
| Messing | 1,6 | -0,9 | 2 | 10 max |
| Stahl | -0,5 | 0,1 | 0 | 10 max |
| Grauguss | -1,4 | 1,3 | 1 | 10 max |
| Gussaluminium | 4,6 | -4,0 | 2 | 30 max |

| | | | | |
|---|---|---|---|---|
| *) Die Werte gemäß dem Korrosionstest gemäß ASTM D1384 sind den Produktinformationen entnommen. | | | | |

| | Kühlmittel 3 | Kühlmittel 4 | Kühlmittel 5 | |
|---|---|---|---|---|
| | Abtrag | Abtrag | Abtrag | Grenze gemäß ASTM D 3306 |
| | mg/Prüfkörper | mg/Prüfkörper | mg/Prüfkörper | mg/Prüfkörper |
| Kupfer | 0,0 | 0,1 | 1 | 10 max |
| Weichlot | -0,3 | 0,3 | 0 | 30 max |
| Messing | 0,6 | 0,2 | 1 | 10 max |
| Stahl | -0,3 | -0,2 | 1 | 10 max |
| Grauguss | 0,6 | -1,0 | 4 | 10 max |
| Gussaluminium | -2,4 | -1,1 | -2 | 30 max |

Man sieht, dass die Kühlmittel 1 und besonders 2 bessere Korrosionsergebnisse zeigen, als Kühlmittel 0, besonders in Bezug auf die Aluminiumkorrosion und somit für Kühlsysteme mit Aluminiumbauteilen besser geeignet sind. Ferner sieht man, dass die Kühlmittel 3, 4 und 5 bessere Korrosionsergebnisse zeigen als Kühlmittel 0, besonders in Bezug auf die Buntmetall- (Kupfer- und Messing-), aber auch Aluminiumkorrosion und somit für Kühlsysteme mit Aluminiumbauteilen besser geeignet sind. Ferner zeigen die Kühlmittel 3, 4 und 5 einen deutlichen Vorteil in der Buntmetallkorrosion verglichen mit den Kühlmittel 1 und 2. Da häufig Dichtungen und Armaturen aus derartigen Buntmetallen gefertigt sind, bewirkt eine verringerte Korrosion eine erhöhte Sicherheit gegen des Entstehen von Leckagen im Kühlsystem.

## Patentansprüche

1. Verwendung eines Kühlmittels, enthaltend
- mindestens ein Alkylenglykol, Alkylenglykolmonoalkylether oder Glycerin, bevorzugt Monoethylenglykol,
- optional mindestens eine organische Mono- oder Dicarbonsäure, bevorzugt aliphatische Mono- oder Dicarbonsäure,
- optional mindestens ein anorganisches Salz ausgewählt aus der Gruppe bestehend aus Molybdaten, Boraten, Phosphaten, Silikaten, Nitriten und Nitraten,
- mindestens eine Azolverbindung,
- Wasser,
- optional mindestens einen Kieselsäureester,
- optional mindestens ein Silikophosphonat, sofern Silikate anwesend sind, und
- optional weitere Inhibitoren und kühlmitteltypische Bestandteile,
unter Ausschluss einer Kombination aus alkoxyliertem acetylenischen Alkohol und Korrosionsinhibitoren mit Imidazolinstruktur im Kühlmittel,
mit der Maßgabe, dass mindestens eine Mono- oder Dicarbonsäure und/oder mindestens ein anorganisches Salz in dem Kühlmittel anwesend sind,
und mit der weiteren Maßgabe, dass bei Abwesenheit des mindestens einen anorganischen Salzes mindestens eine Dicarbonsäure, bevorzugt mindestens eine aliphatische Dicarbonsäure in dem Kühlmittel anwesend ist,
in einem Kühlsystem von Windkraftanlagen, bevorzugt in einem Kühlsystem zum Wärmemanagement mindestens eines Bestandteils einer Windkraftanlage ausgewählt aus der Gruppe bestehend aus
- Generator,
- Getriebe,
- Lager,
- Umrichter und
- Stellsystem.

2. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff
enthält,
mit der Maßgabe, dass keine Mono- oder Dicarbonsäuren in dem Kühlmittel anwesend sind.

3. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine organische Dicarbonsäure, bevorzugt mindestens eine aliphatische Dicarbonsäure, besonders bevorzugt mindestens eine aliphatische Dicarbonsäure unter Verzicht auf Monocarbonsäuren,
- mindestens eine Azolverbindung
- Wasser
- optional Hartwasserstabilisator, Bitterstoff, Entschäumer und/oder Farbstoff.
enthält,
mit der Maßgabe, dass keine anorganischen Salze ausgewählt aus der Gruppe bestehend aus Molybdaten, Boraten, Phosphaten, Silikaten, Nitriten und Nitraten in dem Kühlmittel anwesend sind.

4. Verwendung gemäß Anspruch 3, **dadurch gekennzeichnet, dass** das Kühlmittel mindestens eine aliphatische Dicarbonsäure enthält und gleichzeitig keine aliphatischen Monocarbonsäuren anwesend sind.

5. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine aromatische organische Monocarbonsäure,
- mindestens ein anorganisches Salz ausgewählt aus der Gruppe bestehend aus Molybdaten, Boraten, Phosphaten, Silikaten, Nitriten und Nitraten,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff
enthält.

6. Verwendung gemäß Anspruch 1, **dadurch gekennzeichnet, dass** das Kühlmittel
- mindestens ein Alkylenglykol, Alkylenglykolmonoalkylether oder Glycerin, bevorzugt Monoethylenglykol
- mindestens eine organische Mono- oder Dicarbonsäure, bevorzugt aliphatische Mono- oder Dicarbonsäure,
- mindestens ein anorganisches Salz ausgewählt aus der Gruppe bestehend aus Molybdaten, Boraten, Phosphaten, Silikaten und Nitraten, bevorzugt ausgewählt aus der Gruppe bestehend aus Phosphaten und Silikaten, besonders bevorzugt ein Silikat,
- mindestens eine Azolverbindung
- Wasser
- optional mindestens ein Silikophosphonat, sofern Silikate anwesend sind, bevorzugt mindestens ein Silikophosphonat, sofern Silikate anwesend sind, und
- optional Hartwasserstabilisator, Bitterstoff, Entschäumer und/oder Farbstoff.
enthält.

7. Verwendung gemäß einem der vorstehenden Ansprüche, **dadurch gekennzeichnet, dass** das Kühlmittel eine Viskosität bei 20 °C gemäß ASTM D445 von nicht mehr als 3 mm²/s aufweist.

8. Verwendung gemäß einem der vorstehenden Ansprüche, **dadurch gekennzeichnet, dass** die Azolverbindung ausgewählt ist aus der Gruppe bestehend aus Benzotriazol und Tolutriazol.

9. Verwendung gemäß einem der vorstehenden Ansprüche, **dadurch gekennzeichnet, dass** es sich bei dem mindestens einen Alkylenglykol, Alkylenglykolmonoalkylether oder Glycerin um Monoethylenglykol handelt, bevorzugt, dass es aus Monoethylenglykol besteht.

10. Verwendung gemäß Anspruch 5, **dadurch gekennzeichnet, dass** die organische Monocarbonsäure Benzoesäure umfasst.

11. Verwendung gemäß einem der Ansprüche 1, 3 oder 6 bis 9, **dadurch gekennzeichnet, dass** die organische Monocarbonsäure, sofern nicht ausgeschlossen, 2-Ethylhexansäure oder Isononansäure, besonders bevorzugt Isononansäure umfasst.

12. Verwendung gemäß einem der Ansprüche 1 oder 3 bis 9, **dadurch gekennzeichnet, dass** die organische Dicarbonsäure ausgewählt ist aus der Gruppe bestehend aus Adipinsäure, Sebacinsäure und Dodekandisäure, bevorzugt aus der Gruppe bestehend aus Adipinsäure und Sebacinsäure.

13. Verwendung gemäß einem der vorstehenden Ansprüche, **dadurch gekennzeichnet, dass** das Kühlmittel zum Wärmemanagement von Generator und/oder Umrichter eingesetzt wird.

14. Verwendung gemäß einem der Ansprüche 1 bis 12, **dadurch gekennzeichnet, dass** das Kühlmittel zum Wärmemanagement von Getriebe und/oder Stellsystem eingesetzt wird.

15. Verfahren zum Befüllen des Kühlsystems einer Windkraftanlage mit einem Kühlmittel, in dem man an einem ersten Ort ein Konzentrat, enthaltend
- 0,1 bis 15 Gew% Wasser
- 50 bis 95 Gew% Alkylenglykol, Alkylenglykolmonoalkylether und Glycerin,
- in Summe 0,5 bis 15 Gew% der folgenden Komponenten:
-- optional mindestens eine organische Mono- oder Dicarbonsäure, bevorzugt aliphatische Mono- oder Dicarbonsäure,
-- optional mindestens ein anorganisches Salz ausgewählt aus der Gruppe bestehend aus Molybdaten, Boraten, Phosphaten, Silikaten, Nitriten und Nitraten,
-- mindestens eine Azolverbindung
-- optional mindestens einen Kieselsäureester,
-- optional mindestens ein Silikophosphonat, sofern Silikate anwesend sind, sowie
- optional 0 bis zu 3 Gew% weitere Inhibitoren und kühlmitteltypische Bestandteile,
unter Ausschluss einer Kombination aus alkoxyliertem acetylenischen Alkohol und Korrosionsinhibitoren mit Imidazolinstruktur im Kühlmittel,
mit der Maßgabe, dass die Summe aller Komponenten stets 100 Gew% ergibt,
mit der Maßgabe, dass mindestens eine Mono- oder Dicarbonsäure und/oder mindestens ein anorganisches Salz in dem Kühlmittel anwesend sind,
und mit der weiteren Maßgabe, dass bei Abwesenheit des mindestens einen anorganischen Salzes mindestens eine Dicarbonsäure, bevorzugt mindestens eine aliphatische Dicarbonsäure in dem Kühlmittel anwesend ist,
in einem Volumenverhältnis 1 : 1 bis 1 : 3 mit Wasser vermischt,
zur Windkraftanlage an einen zweiten Ort transportiert und dort das Kühlsystem der Windkraftanlage befüllt.

16. Verfahren gemäß Anspruch 15, **dadurch gekennzeichnet, dass** das Befüllen der Windkraftanlage bei einer Temperatur erfolgt, bei der das Kühlmittel eine Viskosität gemäß ASTM D445 von nicht mehr als 3 mm²/s aufweist.

17. Verfahren zum Wärmemanagement von Bestandteilen von Windkraftanlagen, in dem Wärme von mindestens einem Bestandteil einer Windkraftanlage ausgewählt aus der Gruppe bestehend aus
- Generator,
- Getriebe,
- Lager,
- Umrichter und
- Stellsystem
bei einer höheren Temperatur über mindestens einen ersten Wärmetauscher auf ein Kühlmittel übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, in dem
- als Kühlmittel eine Zusammensetzung wie in einem der Ansprüche 1 bis 12 eingesetzt wird,
- die höhere Temperatur von 20 bis 100 °C, bevorzugt 25 bis 80, besonders bevorzugt 30 bis 60 °C beträgt,
- die niedrigere Temperatur von minus 50 bis 40 °C, bevorzugt minus 40 bis 40, besonders bevorzugt minus 30 bis 35 °C beträgt und
- die niedrigere Temperatur mindestens 5 °C, bevorzugt mindestens 10, besonders bevorzugt mindestens 15 und ganz besonders bevorzugt mindestens 20 °C niedriger liegt als die höhere Temperatur.

## Claims

1. Use of a coolant containing
- at least one alkylene glycol, alkylene glycol monoalkyl ether or glycerin, preferably monoethylene glycol,
- optionally at least one organic mono- or dicarboxylic acid, preferably aliphatic mono- or dicarboxylic acid,
- optionally at least one inorganic salt selected from the group consisting of molybdates, borates, phosphates, silicates, nitrites and nitrates,
- at least one azole compound,
- water,
- optionally at least one silicic acid ester,
- optionally at least one silicophosphonate, if silicates are present, and
- optionally further inhibitors and coolant-typical constituents,
excluding a combination of alkoxylated acetylenic alcohol and corrosion inhibitors with imidazoline structure in the coolant,
with the proviso that at least one mono- or dicarboxylic acid and/or at least one inorganic salt are present in the coolant,
and with the further proviso that in the absence of the at least one inorganic salt, at least one dicarboxylic acid, preferably at least one aliphatic dicarboxylic acid, is present in the coolant,
is present,
in a cooling system of wind turbines, preferably in a cooling system for thermal management of at least one component of a wind turbine selected from the group consisting of
- generator,
- gearbox,
- bearing,
- converter and
- control system.

2. Use according to Claim 1, **characterized in that** the coolant
- at least one alkylene glycol, alkylene glycol monoalkyl ether or glycerin, preferably monoethylene glycol
- at least one inorganic salt selected from the group consisting of molybdates, borates,
phosphates, silicates, nitrites and nitrates,
- at least one azole compound
- water
- optionally at least one silicophosphonate, if silicates are present, preferably at least one silicophosphonate, if silicates are present, and
- optionally hard water stabilizer, bittering agent, defoamer and/or dye
contains,
with the proviso that no mono- or dicarboxylic acids are present in the coolant.

3. Use according to Claim 1, **characterized in that** the coolant
- at least one alkylene glycol, alkylene glycol monoalkyl ether or glycerin, preferably monoethylene glycol
- at least one organic dicarboxylic acid, preferably at least one aliphatic dicarboxylic acid, particularly preferably at least one aliphatic dicarboxylic acid while dispensing with monocarboxylic acids,
- at least one azole compound
- water
- optionally hard water stabilizer, bittering agent, defoamer and/or dye.
contains,
with the proviso that no inorganic salts selected from the group consisting of molybdates, borates, phosphates, silicates, nitrites and nitrates are present in the coolant.

4. Use according to Claim 3, **characterized in that** the coolant contains at least one aliphatic dicarboxylic acid and at the same time no aliphatic monocarboxylic acids are present.

5. Use according to Claim 1, **characterized in that** the coolant
- at least one alkylene glycol, alkylene glycol monoalkyl ether or glycerin, preferably monoethylene glycol
- at least one aromatic organic monocarboxylic acid,
- at least one inorganic salt selected from the group consisting of molybdates, borates, phosphates, silicates, nitrites and nitrates,
- at least one azole compound
- water
- optionally at least one silicophosphonate, if silicates are present, preferably at least one silicophosphonate, if silicates are present, and
- optionally hard water stabilizer, bittering agent, defoamer and/or dye
contains.

6. Use according to Claim 1, **characterized in that** the coolant
- at least one alkylene glycol, alkylene glycol monoalkyl ether or glycerin, preferably monoethylene glycol
- at least one organic mono- or dicarboxylic acid, preferably aliphatic mono- or dicarboxylic acid,
- at least one inorganic salt selected from the group consisting of molybdates, borates, phosphates, silicates and nitrates, preferably selected from the group consisting of phosphates and silicates, particularly preferably a silicate,
- at least one azole compound
- water
- optionally at least one silicophosphonate, if silicates are present, preferably at least one silicophosphonate, if silicates are present, and
- optionally hard water stabilizer, bittering agent, defoamer and/or dye.
contains.

7. Use according to one of the preceding claims, **characterized in that** the coolant has a viscosity at 20 °C according to ASTM D445 of not more than 3 mm²/s.

8. Use according to one of the preceding claims, **characterized in that** the azole compound is selected from the group consisting of benzotriazole and tolutriazole.

9. Use according to one of the preceding claims, **characterized in that** the
at least one alkylene glycol, alkylene glycol monoalkyl ether or glycerin is monoethylene glycol, preferably that it consists of monoethylene glycol.

10. Use according to Claim 5, **characterized in that** the organic monocarboxylic acid comprises benzoic acid.

11. Use according to one of Claims 1, 3 or 6 to 9, **characterized in that** the organic monocarboxylic acid, unless excluded, comprises 2-ethylhexanoic acid or isononanoic acid, particularly preferably isononanoic acid.

12. Use according to one of Claims 1 or 3 to 9, **characterized in that** the organic dicarboxylic acid is selected from the group consisting of adipic acid, sebacic acid and dodecanedioic acid, preferably from the group consisting of adipic acid and sebacic acid.

13. Use according to one of the preceding claims, **characterized in that** the coolant is used for thermal management of generator and/or converter.

14. Use according to one of Claims 1 to 12, **characterized in that** the coolant is used for thermal management of gearbox and/or control system.

15. Method for filling the cooling system of a wind turbine with a coolant, in which at a first location a concentrate containing
- 0.1 to 15% by weight water
- 50 to 95% by weight alkylene glycol, alkylene glycol monoalkyl ether and glycerin,
- in total 0.5 to 15% by weight of the following components:
-- optionally at least one organic mono- or dicarboxylic acid, preferably aliphatic mono- or dicarboxylic acid,
-- optionally at least one inorganic salt selected from the group consisting of molybdates, borates, phosphates, silicates, nitrites and nitrates,
-- at least one azole compound
-- optionally at least one silicic acid ester,
-- optionally at least one silicophosphonate, if silicates are present, as well as
- optionally 0 up to 3% by weight further inhibitors and coolant-typical constituents,
excluding a combination of alkoxylated acetylenic alcohol and corrosion inhibitors with imidazoline structure in the coolant,
with the proviso that the sum of all components always equals 100% by weight,
with the proviso that at least one mono- or dicarboxylic acid and/or at least one inorganic salt are present in the coolant,
and with the further proviso that in the absence of the at least one inorganic salt, at least one dicarboxylic acid, preferably at least one aliphatic dicarboxylic acid, is present in the coolant,
is present,
is mixed with water in a volume ratio of 1 : 1 to 1 : 3,
transported to the wind turbine at a second location and the cooling system of the wind turbine is filled there.

16. Method according to Claim 15, **characterized in that** the filling of the wind turbine is carried out at a temperature at which the coolant has a viscosity according to ASTM D445 of not more than 3 mm²/s.

17. Method for thermal management of components of wind turbines, in which heat from at least one component of a wind turbine selected from the group consisting of
- generator,
- gearbox,
- bearing,
- converter and
- control system
is transferred at a higher temperature via at least one first heat exchanger to a coolant,
this coolant is conducted in a cooling circuit to at least one second heat exchanger
and heat is dissipated from the coolant there at a lower temperature, in which
- a composition as in one of Claims 1 to 12 is used as the coolant,
- the higher temperature is from 20 to 100 °C, preferably 25 to 80, particularly preferably 30 to 60 °C,
- the lower temperature is from minus 50 to 40 °C, preferably minus 40 to 40, particularly preferably minus 30 to 35 °C and
- the lower temperature is at least 5 °C, preferably at least 10, particularly preferably at least 15 and most particularly preferably at least 20 °C lower than the higher temperature.

## Revendications

1. Utilisation d'un liquide de refroidissement contenant
- au moins un alkylèneglycol, un éther monoalkylique d'alkylèneglycol ou du glycérol, de préférence du monoéthylèneglycol,
- optionnellement au moins un acide monocarboxylique ou dicarboxylique organique, de préférence un acide monocarboxylique ou dicarboxylique aliphatique,
- optionnellement au moins un sel inorganique choisi dans le groupe constitué des molybdates, des borates, des phosphates, des silicates, des nitrites et des nitrates,
- au moins un composé azolé,
- de l'eau,
- optionnellement au moins un ester d'acide silicique,
- optionnellement au moins un silicophosphonate, si des silicates sont présents, et
- optionnellement d'autres inhibiteurs et composants typiques des liquides de refroidissement,
à l'exclusion d'une combinaison d'alcool acétylénique alcoxylé et d'inhibiteurs de corrosion à structure imidazoline dans le liquide de refroidissement,
à condition qu'au moins un acide monocarboxylique ou dicarboxylique et/ou au moins un sel inorganique soient présents dans le liquide de refroidissement,
et à la condition supplémentaire qu'en l'absence dudit au moins un sel inorganique, au moins un acide dicarboxylique, de préférence au moins un acide dicarboxylique aliphatique, soit présent dans le liquide de refroidissement,
est présent,
dans un système de refroidissement d'éoliennes, de préférence dans un système de refroidissement pour la gestion thermique d'au moins un composant d'une éolienne choisi dans le groupe constitué de
- générateur,
- boîte de vitesses,
- palier,
- convertisseur et
- système de commande.

2. Utilisation selon la revendication 1, **caractérisée en ce que** le liquide de refroidissement contient
- au moins un alkylèneglycol, un éther monoalkylique d'alkylèneglycol ou du glycérol, de préférence du monoéthylèneglycol
- au moins un sel inorganique choisi dans le groupe constitué des molybdates, des borates,
des phosphates, des silicates, des nitrites et des nitrates,
- au moins un composé azolé
- de l'eau
- optionnellement au moins un silicophosphonate, si des silicates sont présents, de préférence au moins un silicophosphonate, si des silicates sont présents, et
- optionnellement un stabilisant pour eau dure, un agent amer, un antimousse et/ou un colorant
contient,
à condition qu'aucun acide monocarboxylique ou dicarboxylique ne soit présent dans le liquide de refroidissement.

3. Utilisation selon la revendication 1, **caractérisée en ce que** le liquide de refroidissement contient
- au moins un alkylèneglycol, un éther monoalkylique d'alkylèneglycol ou du glycérol, de préférence du monoéthylèneglycol
- au moins un acide dicarboxylique organique, de préférence au moins un acide dicarboxylique aliphatique, particulièrement de préférence au moins un acide dicarboxylique aliphatique sans acides monocarboxyliques,
- au moins un composé azolé
- de l'eau
- optionnellement un stabilisant pour eau dure, un agent amer, un antimousse
et/ou un colorant. contient,
à condition qu'aucun sel inorganique choisi dans le groupe constitué des molybdates, des borates, des phosphates, des silicates, des nitrites et des nitrates ne soit présent dans le liquide de refroidissement.

4. Utilisation selon la revendication 3, **caractérisée en ce que** le liquide de refroidissement contient au moins un acide dicarboxylique aliphatique et qu'en même temps aucun acide monocarboxylique aliphatique n'est présent.

5. Utilisation selon la revendication 1, **caractérisée en ce que** le liquide de refroidissement contient
- au moins un alkylèneglycol, un éther monoalkylique d'alkylèneglycol ou du glycérol, de préférence du monoéthylèneglycol
- au moins un acide monocarboxylique organique aromatique,
- au moins un sel inorganique choisi dans le groupe constitué des molybdates, des borates, des phosphates, des silicates, des nitrites et des nitrates,
- au moins un composé azolé
- de l'eau
- optionnellement au moins un silicophosphonate, si des silicates sont présents, de préférence au moins un silicophosphonate, si des silicates sont présents, et
- optionnellement un stabilisant pour eau dure, un agent amer, un
antimousse et/ou un colorant.

6. Utilisation selon la revendication 1, **caractérisée en ce que** le liquide de refroidissement contient
- au moins un alkylèneglycol, un éther monoalkylique d'alkylèneglycol ou du glycérol, de préférence du monoéthylèneglycol
- au moins un acide monocarboxylique ou dicarboxylique organique, de préférence un acide monocarboxylique ou dicarboxylique aliphatique,
- au moins un sel inorganique choisi dans le groupe constitué des molybdates, des borates, des phosphates, des silicates et des nitrates, de préférence choisi dans le groupe constitué des phosphates et des silicates, particulièrement de préférence un silicate,
- au moins un composé azolé
- de l'eau
- optionnellement au moins un silicophosphonate, si des silicates sont présents, de préférence au moins un silicophosphonate, si des silicates sont présents, et
- optionnellement un stabilisant pour eau dure, un agent amer, un antimousse
et/ou un colorant. contient.

7. Utilisation selon l'une des revendications précédentes, **caractérisée en ce que** le liquide de refroidissement présente une viscosité à 20 °C selon ASTM D445 d'au plus 3 mm²/s.

8. Utilisation selon l'une des revendications précédentes, **caractérisée en ce que** le composé azolé est choisi dans le groupe constitué du benzotriazole et du tolutriazole.

9. Utilisation selon l'une des revendications précédentes, **caractérisée en ce que** ledit au moins un alkylèneglycol, éther monoalkylique d'alkylèneglycol ou glycérol est du monoéthylèneglycol, de préférence qu'il est constitué de monoéthylèneglycol.

10. Utilisation selon la revendication 5, **caractérisée en ce que** l'acide monocarboxylique organique comprend de l'acide benzoïque.

11. Utilisation selon l'une des revendications 1, 3 ou 6 à 9, **caractérisée en ce que** l'acide monocarboxylique organique, sauf s'il est exclu, comprend de l'acide 2-éthylhexanoïque ou de l'acide isononanoïque, particulièrement de préférence de l'acide isononanoïque.

12. Utilisation selon l'une des revendications 1 ou 3 à 9, **caractérisée en ce que** l'acide dicarboxylique organique est choisi dans le groupe constitué de l'acide adipique, de l'acide sébacique et de l'acide dodécanedioïque, de préférence dans le groupe constitué de l'acide adipique et de l'acide sébacique.

13. Utilisation selon l'une des revendications précédentes, **caractérisée en ce que** le liquide de refroidissement est utilisé pour la gestion thermique du générateur et/ou du convertisseur.

14. Utilisation selon l'une des revendications 1 à 12, **caractérisée en ce que** le liquide de refroidissement est utilisé pour la gestion thermique de la boîte de vitesses et/ou du système de commande.

15. Procédé de remplissage du système de refroidissement d'une éolienne avec un liquide de refroidissement, dans lequel on prépare en un premier lieu un concentré contenant
- 0,1 à 15 % en poids d'eau
- 50 à 95 % en poids d'alkylèneglycol, d'éther monoalkylique d'alkylèneglycol et de glycérol,
- au total 0,5 à 15 % en poids des composants suivants :
-- optionnellement au moins un acide monocarboxylique ou dicarboxylique organique, de préférence un acide monocarboxylique ou dicarboxylique aliphatique,
-- optionnellement au moins un sel inorganique choisi dans le groupe constitué des molybdates, des borates, des phosphates, des silicates, des nitrites et des nitrates,
-- au moins un composé azolé
-- optionnellement au moins un ester d'acide silicique,
-- optionnellement au moins un silicophosphonate, si des silicates sont présents, ainsi que
- optionnellement 0 à 3 % en poids d'autres inhibiteurs et composants typiques des liquides de refroidissement, à l'exclusion d'une combinaison d'alcool acétylénique alcoxylé et d'inhibiteurs de corrosion à structure imidazoline dans le liquide de refroidissement,
à condition que la somme de tous les composants soit toujours égale à 100 % en poids,
à condition qu'au moins un acide monocarboxylique ou dicarboxylique et/ou au moins un sel inorganique soient présents dans le liquide de refroidissement,
et à la condition supplémentaire qu'en l'absence dudit au moins un sel inorganique, au moins un acide dicarboxylique, de préférence au moins un acide dicarboxylique aliphatique, soit présent dans le liquide de refroidissement,
est présent,
est mélangé avec de l'eau dans un rapport volumique de 1 : 1 à 1 : 3,
transporté vers l'éolienne en un second lieu et le système de refroidissement de l'éolienne y est rempli.

16. Procédé selon la revendication 15, **caractérisé en ce que** le remplissage de l'éolienne s'effectue à une température à laquelle le liquide de refroidissement présente une viscosité selon ASTM D445 d'au plus 3 mm²/s.

17. Procédé de gestion thermique de composants d'éoliennes, dans lequel la chaleur d'au moins un composant d'une éolienne choisi dans le groupe constitué de
- générateur,
- boîte de vitesses,
- palier,
- convertisseur et
- système de commande
est transférée à une température plus élevée via au moins un premier échangeur de chaleur vers un liquide de refroidissement,
ce liquide de refroidissement est acheminé dans un circuit de refroidissement vers au moins un second échangeur de chaleur
et la chaleur y est évacuée du liquide de refroidissement à une température plus basse, dans lequel
- une composition telle que définie dans l'une des revendications 1 à 12 est utilisée comme liquide de refroidissement,
- la température plus élevée est de 20 à 100 °C, de préférence de 25 à 80, particulièrement de préférence de 30 à 60 °C,
- la température plus basse est de moins 50 à 40 °C, de préférence de moins 40 à 40, particulièrement de préférence de moins
30 à 35 °C et
- la température plus basse est inférieure d'au moins 5 °C, de préférence d'au moins 10, particulièrement de préférence d'au moins 15 et tout particulièrement de préférence d'au moins 20 °C à la température plus élevée.
